# EUROPÄISCHE PATENTSCHRIFT

(11) **EP 1 740 299 B1**
(45) Veröffentlichungstag und Bekanntmachung des Hinweises auf die Patenterteilung: **06.03.2013**
(21) Anmeldenummer: 05731742.2
(22) Anmeldetag: 01.04.2005
(51) Int. Cl.: B01J 8/00, H05B 3/60

(54) **VERFAHREN UND VORRICHTUNG ZUM KONTINUIERLICHEN GEREGELTEN AUSTRAG VON FESTSTOFFEN**
METHOD AND DEVICE FOR THE CONTINUOUSLY-CONTROLLED DISCHARGE OF SOLIDS
PROCEDE ET DISPOSITIF POUR UNE SORTIE CONTINUE ET REGLEE DE MATIERES SOLIDES

(30) Priorität: 28.04.2004 DE 102004020790
(43) Veröffentlichungstag der Anmeldung: 10.01.2007
(73) Patentinhaber: Maschinenfabrik Gustav Eirich GmbH & Co KG, D-74736 Hardheim (DE)
(72) Erfinder: ADELMANN, Dieter, 97900 Külsheim (DE); GERL, Stefan, 97956 Werbach (DE)
(74) Vertreter: WSL Patentanwälte Partnerschaftsgesellschaft
(86) Internationale Anmeldenummer: PCT/EP2005/051481
(87) Internationale Veröffentlichungsnummer: WO 2005/105288

(56) Entgegenhaltungen:
- FR-A- 2 506 918
- US-A- 2 865 848
- US-A- 5 694 413

## Beschreibung

### Technisches Gebiet

Die vorliegende Erfindung betrifft ein Verfahren zum Austragen eines Feststoffs aus einem Silo mit einem polygonalen oder runden Austragsquerschnitt, wobei das Silo kontinuierlich von dem Feststoff durchströmt wird.

Weiterhin betrifft die Erfindung eine Abzugseinrichtung für ein Feststoffsilo mit einem polygonalen oder runden Austragsquerschnitt, sowie ein Feststoffsilo, wobei das Silo für eine Durchströmung mit einem Feststoff ausgelegt ist.

### Stand der Technik

Beim dosierten Abzug aus Silos mit rechteckiger oder quadratischer Austragsöffnung ist bekannt, dass bei einem Schneckenförderer, bei dem die Schnecke konstante Kern- und Außendurchmesser sowie eine konstante Schneckensteigung besitzt, das Schüttgut nur am hinteren Ende des Silos abgezogen wird, während sich im vorderen Bereich des Silos eine tote Zone bildet. Durch Anpassung der Schneckengeometrie z.B. durch Abnahme des Kerndurchmessers in Förderrichtung sowie Zunahme des Außendurchmessers oder der Schneckensteigung, kann die Schnecke längs des ganzen Auslaufquerschnittes Schüttgut aufnehmen SCHULZE, Dietmar. Grundlagen und Möglichkeiten der Schüttguttechnik. Schüttgut - Informationen für die Schüttgutindustrie (Agrichema GmbH).

Aus der DE 3717748 (ZIPPE GMBH U. CO, 6980 WERTHEIM) 26.05.1987 ist ein Plattenwärmetauscher zum Vorwärmen von Schüttgütern bekannt, bei dem das Problem des ungleichmäßigen Feststoffabzugs am unteren Ende des Wärmetauschers durch symmetrisch angeordnete Auslassschächte mit angeflanschtem, nicht regelbaren Rüttelförderern gleicher Förderleistung vermieden wird.

Bei sehr schlecht fließenden Schüttgütern führen diese bekannten Maßnahmen häufig trotzdem noch zu einem inhomogenen Massenfluss des Feststoffes über dem Querschnitt des Apparates. Wird der Feststoff im Silo gleichzeitig geheizt oder gekühlt oder findet während der Durchströmung eine Reaktion statt, so kann der ungleiche Massefluss bspw. zu lokal unterschiedlichen Temperaturen und somit zu unterschiedlichen Produkteigenschaften führen.

Aus der DE 3214472 (EIRICH, HUBERT ET. AL.) 20.04.1982 ist eine regelbare Austragsvorrichtung für eine Vorrichtung zur Erhitzung von elektrisch leitfähigen Schüttgütern bekannt, bei der die Austragsgeschwindigkeit und die elektrische Heizleistung aufeinander abgestimmt werden, um eine möglichst konstante Temperatur im ausgetragenen Produkt zu erzielen.

Bei Vorrichtungen zum Erhitzen von elektrisch leitfähigen Schüttgütern mittels Widerstandsheizung über gegenüberliegende Elektroden ist der Leistungseintrag an den Elektroden abhängig vom Widerstand des dazwischen befindlichen Schüttgutes. Da der durch das Schüttgut geleitete Strom die Tendenz hat, jeweils den Weg des geringsten Widerstandes zu fließen, führt dies bei ungleichmäßigem Massefluss über dem Querschnitt der siloförmigen Vorrichtung zu Temperaturunterschieden zwischen schneller und langsamer strömenden Bereichen. Insbesondere bei sich ändernden Fließeigenschaften der Eingangestoffe durch beispielsweise sich ändernde Eingangstemperatur, Materialfeuchte oder Partikelgrößenverteilung, besteht bisher keine Möglichkeit, die sich daraus ergebenden lokal unterschledlichen Abzugsgeschwindigkeit aus dem Feststoffsilo zu beeinflussen.

US 2,865,848 beschreibt ein Verfahren zum kontinuierlichen Kontaktieren von körnigem Kontaktmaterial mit fluiden Kohlenwasserstoffen, um diese chemisch umzuwandeln. Der Umwandlungsprozess findet dabei in dem Inneren eines Silos statt, in das das körnige Kontaktmaterial geschüttet wird.

US 5,694,413 beschreibt ein Verfahren zum kontinuierlichen Eintrag von Wärme in elektrisch leitfähige Schüttgüter unter Ausnutzung von deren elektrischen Widerstand, in einem Ofenraum mit einer Einlauföffnung und einer Abzugsvorrichtung für den kontinuierlichen Durchsatz von Schüttgut, wobei während des Materialdurchlaufes elektrische Energie in das Material eingeleitet wird sowie eine Vorrichtung zum kontinuierlichen Eintrag von Wärme in elektrisch leitfähige Schüttgüter unter Ausnutzung von deren elektrischen Widerstand, in einem Ofenraum mit einer Einlauföffnung und einer kontinuierlichen Abzugsvorrichtung für das Schüttgut und mit mindestens einem Elektrodenpaar, über welches während des kontinuierlichen Materialdurchlaufes elektrische Energie in das Material eingeleitet wird.

### Offenbarung der Erfindung

Die Aufgabe der vorliegenden Erfindung ist es, ein Verfahren und eine Abzugsvorrichtung für ein Feststoffsilo sowie ein Feststoffsilo, das mit einer solchen Abzugsvorrichtung ausgerüstet werden kann, zu schaffen, welche einen regelbaren, über den Querschnitt des Silos gleichmäßigen Feststoffabzug gestatten und somit die Herstellung von Schüttgütern, die bei der Durchströmung des Silos physikalisch oder chemisch behandelt, insbesondere erwärmt oder gekühlt werden, mit möglichst homogenen Eigenschaften, insbesondere geringen Temperaturunterschieden, ermöglichen. Ferner gestattet die Erfindung in ihrer bevorzugten Ausgestaltung eine automatische Anpassung an sich verändernde Fließeigenschaften der verwendeten Eingangsstoffe.

Diese Aufgabe wird durch die Gegenstände der Ansprüche 1, 11 und 13 gelöst.

Der erfindungsgemäße Siloaustrag zerteilt den Abzugsquerschnitt bzw. Austragsquerschnitt in mehrere, vorzugsweise untereinander gleiche Teilquerabschnitte, an die jeweils ein kontinuierliches, regelbares Austragsorgan angeflanscht wird. Der aus den regelbaren Austragsorganen austretende Feststoffstrom kann beispielsweise mittels einer darunter befindlichen kontinuierlichen Fördereinrichtung zusammengefasst und abgezogen werden.

Der gleichmäßige Feststoffmassenaustrag an den kontinuierlich arbeitenden Austragsorganen wird dabei in Abhängigkeit von Messsignalen mehrerer gleichartiger Sensoren, welche den lokal vorliegenden Massenstrom oder eine andere Meßgröße In den entsprechenden Teilabschnitten des Silos erfassen über die Förderleistung des jeweils dem Sensor zugeordneten Austragsorgans geregelt.

Zur Erfassung des lokalen Massenstromes kann beispielsweise der elektrische Leistungseintrag an einem elektrisch beheizten Sensor zur Aufrechterhaltung einer voreingestellten Temperatur an der Sensorspitze, GERL, Stefan, et al. Sensor auf Transistorbasis zur In-line-Restfeuchtemessung in ruhenden Haufwerken. Technisches Messen. 1997, Band 64, Nr.7/8, S.268-275, oder bei elektrisch leitfähigen Schüttgütern die Stromstärke an gegenüberliegenden Elektroden verwendet werden.

Auch kann der lokale Energieeintrag von dampf- oder flüssigkeitsdurchströmten Wärmetauschern erfasst und als Signal für den lokalen Massenstrom herangezogen werden.

Weiterhin kann der Feststoffmassenstrom direkt in jedem einem Teilabschnitt des Silos zugeordneten Austragsorgan mittels Wiegung eines jeden Austragsorganes in Verbindung mit der jeweiligen Austragsgeschwindigkeit des Austragsorganes ermittelt werden.

Bei kontinuierlich durchströmten Silos wird zusätzlich der Massenstrom über die Drehzahl der Austragsorgane an den Zuführmassenstrom des Zuführorgans derart angepasst, dass der Füllstand innerhalb des Silos während der Durchströmung konstant bleibt.

Durch den gleichmäßigen, regelbaren Abzug wird beispielsweise eine gleichmäßige Erwärmung/Kühlung des Produktes über dem gesamten Querschnitt des Silos ohne lokal unterschiedliche Produkttemperaturen ermöglicht. Gleichzeitig kann auch die Kapazität der Wärmeübertragungsvorrichtung vollständig genutzt werden.

Alternativ dazu kann die Regelung der Austragsgeschwindigkeiten der einzelnen Austragsorgane über eine Messung der Temperatur des Feststoffs erfolgen. Bei gleichmäßiger Heizleistung in allen Bereichen des Silos wird der Feststoff in solchen Bereichen stärker erwärmt, in denen er länger verbleibt. Bei über den Querschnitt ungleichmäßig verteilter Heizleistung werden in der gleichen Höhe manche Bereiche stärker und andere Bereiche weniger stark erhitzt. Wird nun die Temperatur im Silo oder im Bereich der Austragsorgane gemessen, so können die Fördergeschwindigkeiten der Austragsorgane so angepasst werden, dass der Feststoff aus allen Bereichen bei der Entnahme aus dem Silo die gleiche Temperatur aufweist. Mit anderen Worten wird die Austragsgeschwindigkeit in einem Bereich verlangsamt, wenn die dort gemessene Temperatur des Feststoffes unter einem vorgebbaren ersten Sollwert liegt, und beschleunigt, wenn die dort gemessene Temperatur des Feststoffes über einem zweiten Sollwert liegt. Auf diese Weise stellt man insgesamt eine gleichmäßige Austragstemperatur des Feststoffes, die in allen Teilquerschnitten des Austragsquerschnitts zwischen dem ersten und zweiten Sollwert (die auch gleich sein können) liegt, sicher. Dabei können verschiedene, im Stand der Technik bekannte Regelverfahren, wie z.B. die PID-Regelung angewandt werden.

### Kurze Beschreibung der Zeichnungen

Die Erfindung wird in den Zeichnungen beispielhaft und schematisch dargestellt. Im einzelnen zeigen:
- Figur 1:: Schematische isometrische Ansicht eines in vier Teilabschnitte unterteilten Silos mit Massestromsensoren, Signalauswerte- und Steuereinheit und regelbaren Austragsschnecken.
- Figur 2:: Draufsicht auf einen rechteckigen Austragsboden eines Silos entlang Schnitt X-X' in Figur 1 mit vier Abzugsschnecken mit progressiver Schneckensteigung.
- Figur 3:: Schematische Seitenansicht eines kontinuierlich mit Feststoffen durchströmten, verwogenen Silos mit Massestromsensoren, Signalauswerte- und Steuereinheit und regelbaren progressiven Abzugsschnecken.
- Figur 4:: Schematische isometrische Ansicht eines in vier Teilabschnitte unterteilten, verwogenen Silos mit regelbaren Austragsschnecken, Elektroden zur Aufheizung von elektrisch leitfähigen Feststoffen sowie Signalauswerte- und Steuereinheit.
- Figur 5:: Schematische isometrische Ansicht eines in vier Teilabschnitte unterteilten Silos mit Füllstandssensor, regelbaren Austragsschnecken, Wärmetauscherelementen, Massestromsensoren sowie Signalauswerte- und Steuereinheit.
- Figur 6:: Schematische isometrische Ansicht eines in vier Teilabschnitte unterteilten Silos mit regelbaren Austragsschnecken, als Massestromsensoren arbeitenden Wärmetauscherelementen sowie Signalauswerte- und Steuereinheit.
- Figur 7:: Schematische Seitenansicht eines Silos mit regelbaren Zellenradschleusen
- Figur 8:: Schematische Seitenansicht eines Silos mit regelbaren Förderschnecken mit gegenüberliegenden Austragsöffnungen.
- Figur 9:: Schematische Seitenansicht eines Silos mit regelbaren Förderschnecken mit mittiger Austragsöffnung und orthogonal angeordnetem Fördergerät.
- Figur 10:: Schematische Seitenansicht eines kontinuierlich mit Feststoffen durchströmten, verwogenen negativ konischen Silos mit Signalauswerte- und Steuereinheit und regelbaren progressiven Schneckenwaagen.

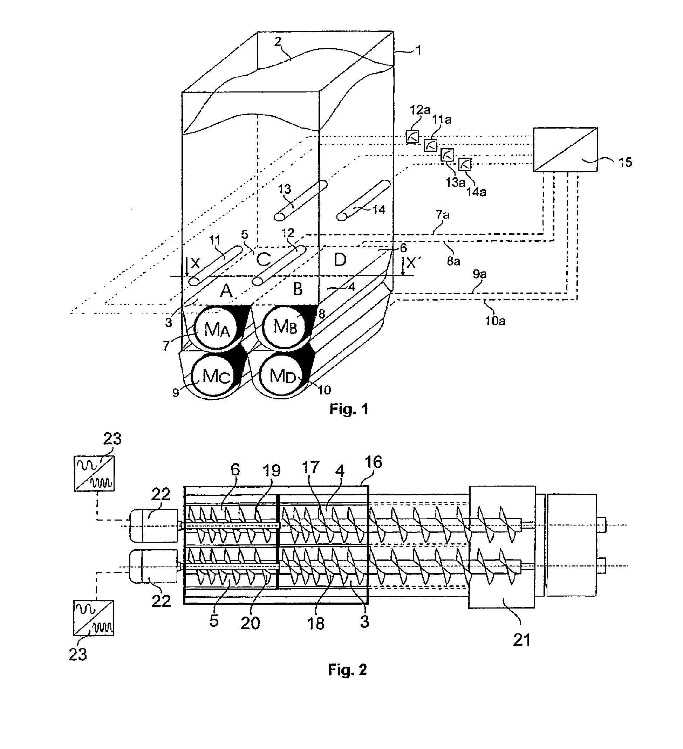

Figur 1 zeigt ein rechteckiges Silo 1 mit einer Feststoffschüttung 2 welches im Bodenbereich in vier gleichförmige Abschnitte 3, 4, 5 und 6 aufgeteilt ist. Jeder der Abschnitte 3, 4, 5 und 6 verfügt über ein eigenes kontinuierliches, regelbares Austragsgerät bzw. -organ 7, 8, 9 und 10, z.B. eine Austragsschnecke, welches den Feststoff 2 aus dem jeweiligen Abschnitt kontinuierlich abziehen kann. Oberhalb eines jeden Abschnittes 3, 4, 5 und 6 ist ein jeweils mindestens ein dem Abschnitt zugeordneter Massenstromsensor 11, 12, 13 und 14 angeordnet. Jeder der gleichartigen Sensoren 11, 12, 13 und 14 erfasst die lokale Strömung der Feststoffschüttung 2 in dem Abschnitt in dem das Messfeld eines jeden Sensors liegt. Die Signale 11a, 12a, 13a und 14a der jeweiligen Sensoren 11, 12, 13 und 14 werden einer Signalauswerte- und Steuereinheit 15 zugeführt. Die Signalauswerte- und Steuereinheit 15 erzeugt Stellsignale 7a, 8a, 9a und 10a für die regelbaren Austragsgeräte 7, 8, 9 und 10 derart, dass die an den Sensoren 11a, 12a, 13a und 14a anliegenden, dem Feststoffmassenstrom proportionalen Signale gleich hoch und somit der Feststoffmassenstrom in jedem Abschnitt gleich groß ist.

Figur 2 zeigt die Draufsicht auf den Austragsboden eines erfindungsgemäßen Silos entlang Schnitt X-X' in Figur 1. Es sind über dem Auslaufquerschnitt des Silos 16 jeweils zwei Schnecken 17, 18 nebeneinander und zwei Schnecken 17, 19 und 18, 20 übereinander angeordnet. Die Schnecken können bspw. mit progressiver Steigung versehen werden. Im Austragsbereich 21, in den alle Schneckenausläufe einmünden, fällt der aus dem Silo abgezogene Feststoff in Schwerkraftrichtung in nachgeschaltete Anlagenteile (nicht dargestellt). Für die stufenlose Verstellbarkeit der Austragsgeschwindigkeit einer jeden Schnecke wird diese mit einem Motor 22 mit Frequenzumformer 23 oder Verstellgetriebe (nicht dargestellt) versehen. Die Austragsgeschwindigkeit in jedem Abschnitt bzw. Teilquerschnitt des Austragsbodens 3, 4, 5 und 6 des Silos kann somit individuell eingestellt werden.

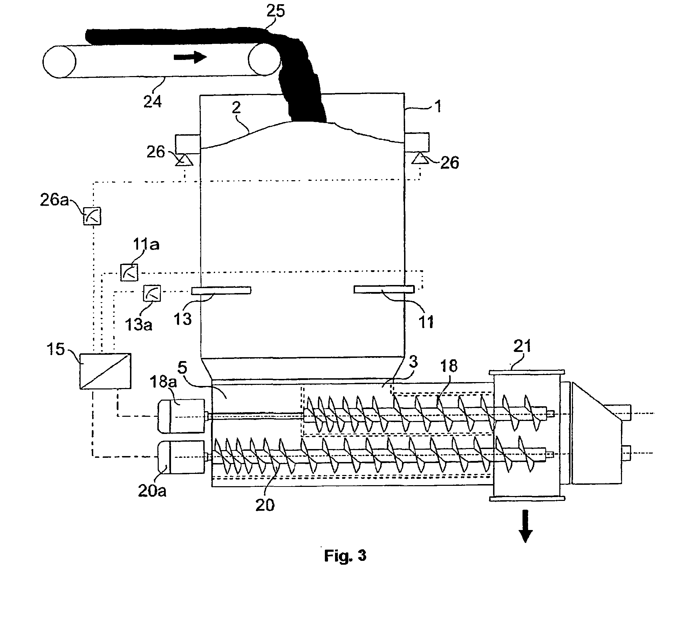

Figur 3 zeigt ein kontinuierlich mit Feststoffen 2 durchströmtes Silo 1 mit dem erfindungsgemäßen Austragsboden.

Das Silo 1 wird über ein Dosierorgan 24 , bspw. ein Förderband mit variabler Geschwindigkeit, am oberen Ende mit rieselfähigen Feststoffen 25 beschickt und der Feststoff kontinuierlich im Bodenbereich abgezogen. Um einen definierten Füllgrad innerhalb des Silos halten zu können und um eine Überfüllung zu verhindern, wird der Füllgrad bspw. über eine Wiegeeinrichtung mittels Wägezellen 26 erfasst.

Mit Hilfe einer Signalauswerte- und Steuereinheit 15 werden die Messsignale der baugleichen Sensoren 11 und 13, die den Feststoffmassenstrom in jedem Abschnitt 3, 5 des Abzugsbereiches des Silos erfassen sowie der Füllstand innerhalb des Silos über die Wägezellen 26 erfasst. Die Signalauswerte- und Steuereinheit 15 steuert aufgrund der Eingangsignale 11a, 13a und 26a die Geschwindigkeit der Austragsorgane 18, 20 über die regelbaren Antriebseinheiten 18a, 20a derart, dass der Füllstand innerhalb des Silos konstant bleibt und alle Feststoffmassestromsensoren 11, 13 die gleiche Höhe des Messsignals 11a, 13a registrieren.

In einer weiteren Variante, können mehrere Austragsorgane, beispielsweise 17+18 und 19+20 oder 18+20 und 17+19, regelungstechnisch zusammengefasst werden.

Auch kann an Stelle des Füllstandes innerhalb des Silos der über das Dosierorgan 24 zugeführte messtechnisch erfasste Feststoffstrom 25 zur Regelung der Austragsgeschwindigkeit der Auftragsorgane 18, 20 herangezogen werden.

### Beste Ausführungsform der Erfindung

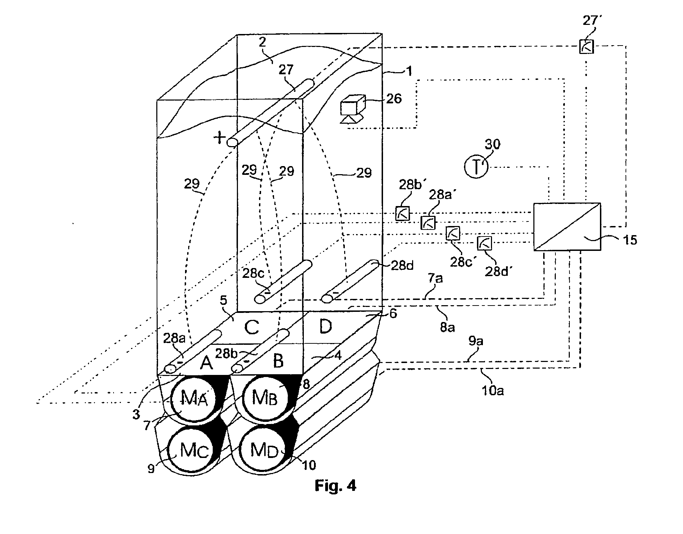

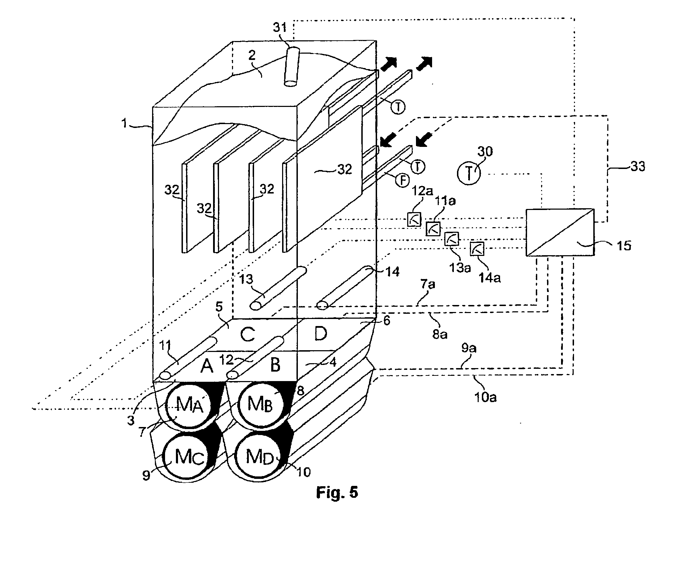

Figur 4 zeigt einen rechteckiges Silo 1 mit einer Feststoffschüttung 2 welches im Bodenbereich in Abschnitte 3, 4, 5 und 6 aufgeteilt ist. Jeder der Abschnitte 3, 4, 5 und 6 verfügt über ein kontinuierliches, regelbares Austragsgerät 7, 8, 9 und 10, z.B. eine Austragsschnecke, welches den Feststoff 2 aus dem jeweiligen Abschnitt kontinuierlich abziehen kann. Das gesamte Silo 1 wird auf Wägezellen 26 gelagert, um einen konstanten Füllgrad sicherzustellen. Alternativ ist auch die Verwendung von Füllstandssensoren 31 (Figur 5) möglich.

In einer besonders vorteilhaften Ausführung der Erfindung sind innerhalb des Silos 1 im oberen Bereich eine oder mehrere, vorzugsweise identische Elektroden 27 (+ Pol) über den gesamten Siloquerschnitt angeordnet, während im unteren Bereich eine oder mehrere, vorzugsweise identische Elektroden 28a, 28b, 28c und 28d (- Pol) oberhalb eines jeden Abzugsquerschnittes 3, 4, 5 und 6 angeordnet sind. Die Polung der Elektroden 27 und 28a, 28b, 28c und 28d ist ebenso umgekehrt möglich. Zwischen den Elektroden und der elektrisch leitfähigen Feststoffschüttung 2 fließ ein Strom 29, dessen Stromstärke abhängig vom Widerstand und somit von der Temperatur des dazwischen befindlichen Feststoffes ist. Die in der Eingangsleitung gemessene Stromstärke 27' teilt sich auf die entsprechende Anzahl von Elektroden 28a, 28b, 28c und 28d im Abzugsbereich auf, wobei die gemessenen Stromstärken 28a', 28b', 28c' und 28d' einer jeden Elektrode 28a, 28b, 28c und 28d in Abhängigkeit vom Widerstand des Feststoffes in jedem Abzugsabschnitt 3, 4, 5, 6 variiert.

Die gemessenen Stromstärken 28a', 28b', 28c' und 28d' der jeweiligen Elektroden 28a, 28b, 28c und 28d werden einer Signalauswerte- und Steuereinheit 15 zugeführt. Weiterhin wird die Stromstärke 27' an der oberen Elektrode 27 sowie das Gewicht des Silos aus den Wägezellen 26 sowie die gemessene Temperatur des Feststoffes 30 am Austragsbereich 21 in die Signalauswerte- und Steuereinheit 15 eingespeist. Die Signalauswerte- und Steuereinheit 15 erzeugt Stellsignale 7a, 8a, 9a und 10a für die regelbaren Austragsgeräte 7, 8, 9 und 10 derart, dass die an den Elektroden 28a, 28b, 28c und 28d anliegende Stromstärke 28a', 28b', 28c' und 28d' gleich hoch und somit der Feststoffmassenstrom in jedem Abschnitt gleich groß ist und darüber hinaus der Füllstand innerhalb des Silos 1 gleich bleibt.

Des weiteren erfasst die Signalauswerte- und Steuereinheit 15 die Temperatur 30 des gesamten ausgetragenen Feststoffes und regelt die eingetragene Leistung an den Elektroden 27, 28a, 28b, 28c und 28d derart, dass die gewünschte Endtemperatur des Produktes am Austrag erzielt wird.

Bei Verwendung mehrerer Elektroden innerhalb eines Abzugsabschnittes werden die gemessenen Stromstärken entsprechend zu einem auswertbaren Messsignal zusammengefasst.

### Ausführungsformen der Erfindung

Figur 5 zeigt eine Variante der Figur 4 und Figur 1, bei der die Erwärmung oder Kühlung des Feststoffes innerhalb des Silos 1 bspw. über mit Dampf, Thermalöl oder Kühlflüssigkeit durchströmte Wärmetauscherelemente 32, die in einer weiteren Variante auch elektrisch beheizt werden könnten, erfolgt. Der Feststoffmassenstrom in jedem Abschnitt 3, 4, 5 und 6 wird gemäß Figur 1 über mehrere Massenstromsensoren 11, 12, 13, 14 erfasst und die Signale 11a, 12a, 13a und 14a einer Signalauswerte- und Steuereinheit 15 zugeführt, die daraus entsprechende Stellsignale für die Austragsgeräte 7, 8 ,9 und 10 gemäß der Beschreibung zu Figur 1 generiert. Der Leistungseintrag 33 an den Heiz- bzw. Kühlelementen 32 innerhalb des Silos, regulierbar beispielsweise über den Durchfluss der Heiz- oder Kühlmediums, erfolgt in Abhängigkeit von der gemessenen Endtemperatur 30 am Austrag der Abzugsschnecken.

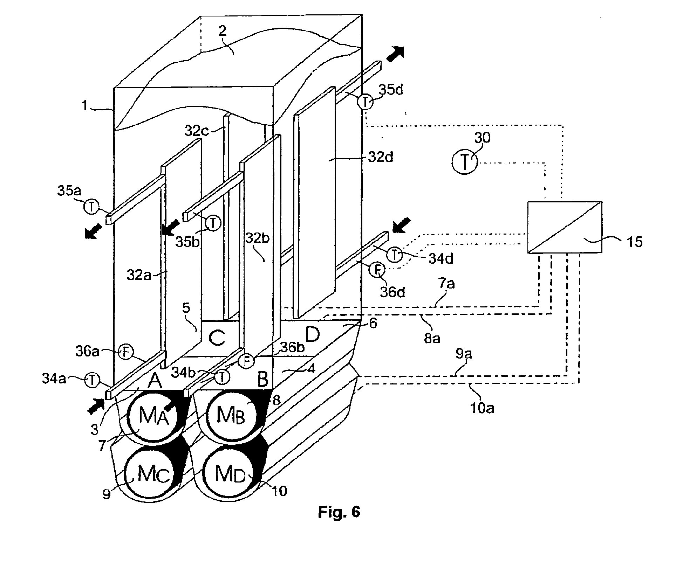

Figur 6 zeigt eine weitere Variante der Figur 5, in der die mit einem Heiz- oder Kühlmedium durchströmten Wärmetauscherelemente 32a, 32b, 32c und 32d gleichzeitig als Massenstromsensoren verwendet werden, indem man jedem Abzugsabschnitt 3, 4, 5 und 6 ein Wärmetauscherelement 32a, 32b, 32c und 32d zuweist, das jeweils mit einem Heiz- oder Kühlmedium durchströmt wird. Über den für jeden Abschnitt individuell erfassten Kühlmediummassen- bzw. - volumenstrom 36a, 36b, 36c und 36d und dem über die jeweilige Temperaturdifferenz zwischen Eintritt 34a, 34b, 34c und 34d und Austritt 35a, 35b, 35c und 35d von der Signalauswerte- und Steuereinheit 15 ermittelten Energieeintrag können Stellsignale für die Austragsgeräte 7, 8 ,9 und 10 gemäß der Beschreibung zu Figur 1 erzeugt werden.

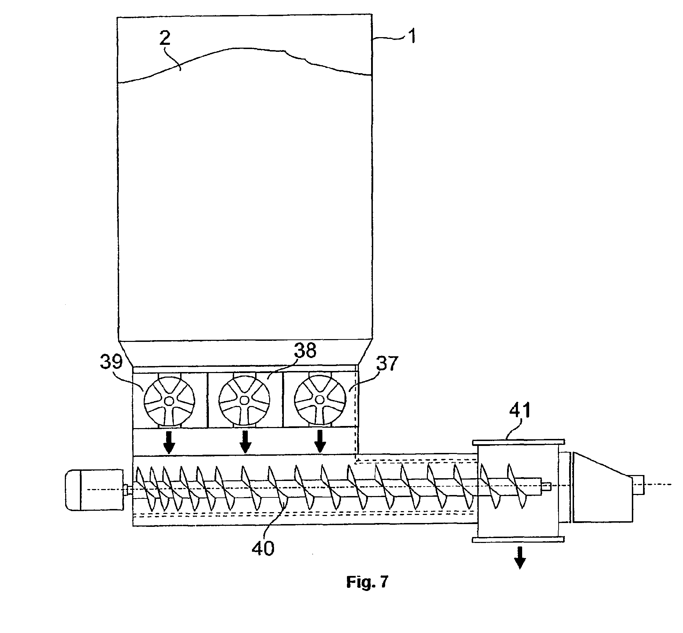

Figur 7 zeigt eine Variante der Figur 3 bei der der Austrag des Feststoffes in den Teilabschnitten 37, 38 und 39 über mehrere, regelbare Zellenradschleusen erfolgt, die den ausgetragenen Feststoff auf ein darunter befindliches kontinuierlich arbeitendes Fördergerät 40 abgeben, welches die einzelnen Feststoffmassenströme zusammenfasst und zu einem vordefinierten Abgabepunkt 41 fördert. Die Regelung der Austragsgeschwindigkeit der Zellenradschleusen erfolgt analog zu der vorherigen Beschreibung über die nicht dargestellten Massenstromsensoren.

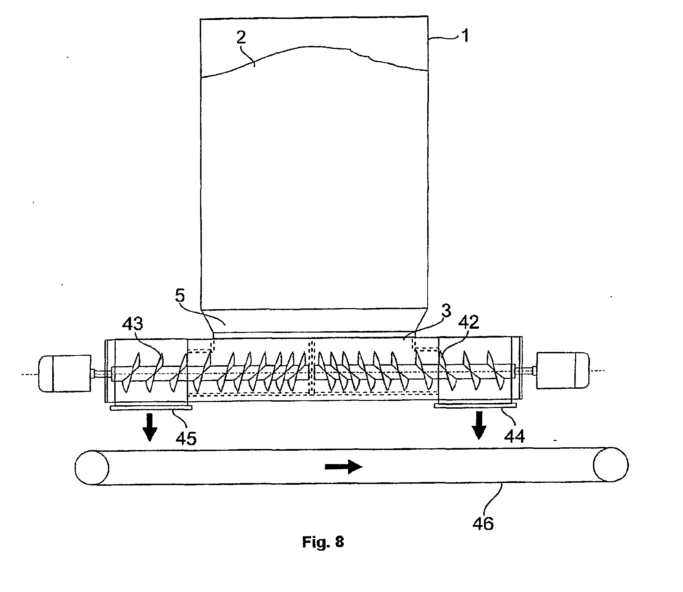

Figur 8 zeigt eine weitere Variante der Figur 3 bei der der Austrag über Schnecken 42, 43 erfolgt, die den aus den Teilabschnitten 3 und 5 abgezogenen Feststoff über gegenüberliegende Austragsöffnungen 44, 45 auf ein darunter befindliches kontinuierlich arbeitende Fördergerät 46 abgeben, welches die einzelnen Feststoffmassenströme zusammenfasst und an einem vordefinierten Punkt abgibt. Auch in diesem Fall erfolgt die Regelung der Austragsgeschwindigkeit der Schnecken 42, 43 analog zu der vorherigen Beschreibung über die nicht dargestellten Massenstromsensoren.

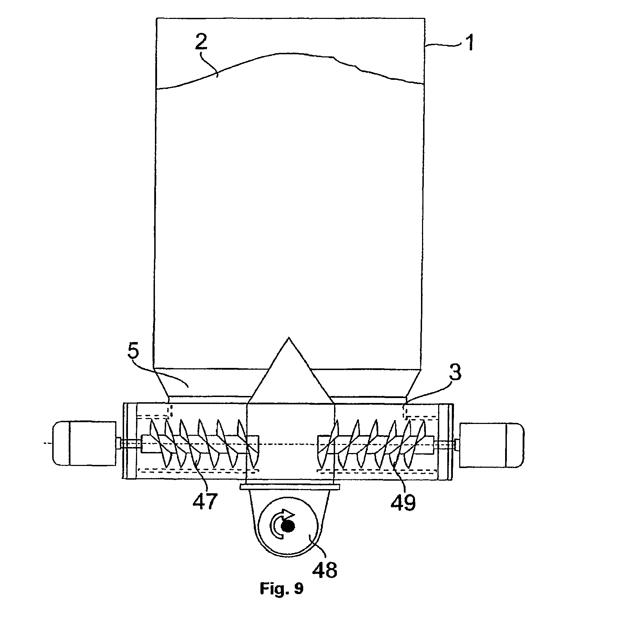

Eine weitere Variante der Figur 8 zeigt die Figur 9, bei der mehrere Abzugsschnecken 47, 49 den aus dem Teilabschnitten 3 und 5 abgezogenen Feststoff jeweils zur Mitte des Silos 1 hin fördern und der Gesamtfeststoffstrom von einem orthogonal angeordneten kontinuierlichen Fördergerät 48 zusammengefasst und an einen vordefinierten Punkt abtransportiert wird.

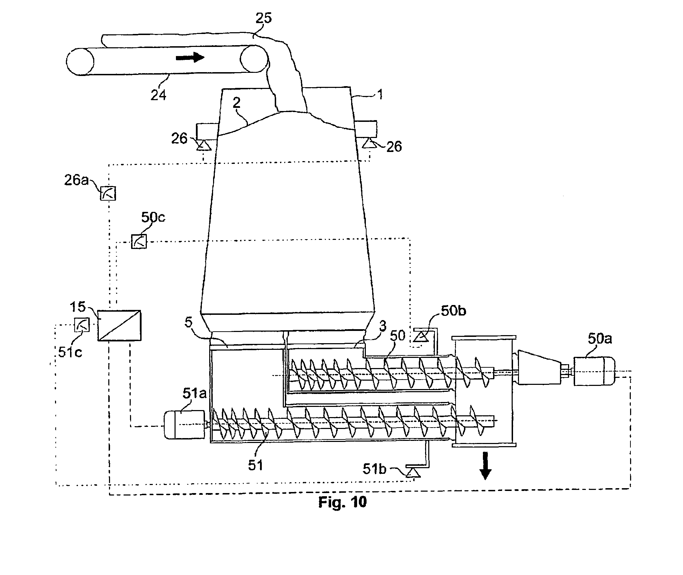

Figur 10 zeigt eine Variante der Figur 3 mit einem kontinuierlich mit Feststoffen 2 durchströmten negativ konischen Silo 1. Das Silo 1 wird über ein Dosierorgan 24 , bspw. einem Förderband mit variabler Geschwindigkeit, am oberen Ende mit rieselfähigen Feststoffen 25 beschickt und der Feststoff kontinuierlich im Bodenbereich abgezogen. Um einen definierten Füllgrad innerhalb des Silos halten zu können und um eine Überfüllung zu verhindern, wird der Füllgrad bspw. über das Gewicht des Silos mittels Wägezellen 26 erfasst. Der Austrag erfolgt über mehrere Schneckenwaagen 50 und 51.

Durch die negativ konische Bauform des Silos 1 wird der Verdichtung des Feststoffes 2 in tieferen Schichten durch das Eigengewicht des Feststoffes entgegengewirkt. Die Schüttdichte und somit beispielsweise auch der elektrische Widerstand der Schüttung bleibt über die Höhe konstant.

Mit Hilfe einer Signalauswerte- und Steuereinheit 15 werden die Gewichte der Förderschnecken 50b und 51 b in jedem Abschnitt 3, 5 des Abzugsbereiches des Silos erfasst und der Feststoffmassenstrom einer jeden Schnecke über die Geschwindigkeit der jeweiligen Schnecke berechnet. Weiterhin wird der Füllstand innerhalb des Silos über die Wägezellen 26 erfasst. Die Signalauswerte- und Steuereinheit 15 steuert aufgrund der Eingangssignale 50c, 51c und 26a die Geschwindigkeit der Austragsorgane 50, 51 über die regelbaren Antriebseinheiten 50a, 51a derart, dass der Füllstand innerhalb des Silos konstant bleibt und alle aus dem Gewicht 50c, 51 c sowie den Drehzahlen der Schnecken 50 und 51 berechneten Feststoffmassenströme gleich groß sind. Alternativ zur Schneckenwaage ist beispielsweise eine Bandwaage oder ein verwogener Schwing- oder Rüttelförderer einsetzbar.

Prinzipiell ist die Erfindung nicht auf die aufgeführten Austragsgeräte beschränkt, sondern ist mit jedem beliebigen, kontinuierlich arbeitenden und regelbaren Austragsorgan durchführbar. Das gleiche gilt für die unterhalb der Austragsorgane befindliche kontinuierliche Fördereinrichtung, die den aus den Austragseinrichtungen austretenden Feststoffstrom zusammenfasst und abtransportiert. An Stelle einer kontinuierlichen Fördereinrichtung kann der aus den Austragsorganen austretende Feststoff auch direkt einem nachgeschalteten Apparat zugeführt werden. Auch ist der Austragsquerschnitt des Silos nicht auf eine polygonale Form, vorzugsweise rechteckig oder quadratisch beschränkt, sondern kann auch rund sein.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Verweise

DE 3717748 (ZIPPE GMBH U. CO, 6980 WERTHEIM) 26.05.1987 ; DE 3214472 (EIRICH, HUBERT ET. AL.) 20.04.1982 ; SCHULZE, Dietmar. Grundlagen und Möglichkeiten der Schüttguttechnik. Schüttgut - Informationen für die Schüttgutindustrie (Agrichema GmbH*). ;* GERL, Stefan, et al.. Sensor auf Transistorbasis zur In-line-Restfeuchtemessung in ruhenden Haufwerken. Technisches Messen. 1997, Band 64, Nr.7/8, S.268-275.

## Patentansprüche

1. Verfahren zum Austragen eines Feststoffs aus einem Silo mit einem polygonalen oder runden Austragsquerschnitt, wobei das Silo kontinuierlich von dem Feststoff durchströmt wird, wobei der Austragsquerschnitt in mehrere Teilquerschnitte unterteilt wird und die Austragsgeschwindigkeit eines jeden Teilquerschnitts individuell eingestellt und geregelt wird, **dadurch gekennzeichnet, dass** die Austragsgeschwindigkeit eines jeden Teilquerschnitts in Abhängigkeit von einem Messsignal geregelt wird, welches aus einer Messgröße des Feststoffes abgeleitet wird, die für einen dem jeweiligen Teilquerschnitt zugeordneten Teilabschnitt des Silos erfasst wird, wobei das Messsignal eines jeden Teilquerschnitts den Feststoffmassenstrom innerhalb des Teilquerschnitts des Silos repräsentiert.

2. Verfahren nach Anspruch 1, **dadurch gekennzeichnet, dass** die Austragsgeschwindlgkeit eines jeden Teilquerschnitts in Abhängigkeit von einem Messsignal, welches ein Maß für die Temperatur des Feststoffes innerhalb des Teilabschnitts des Silos liefert, geregelt wird.

3. Verfahren nach einem der Ansprüche 1 oder 2, **dadurch gekennzeichnet, dass** die Messgröße Innerhalb des Speichervolumens im Silo erfasst wird.

4. Verfahren nach einem der Ansprüche 1 bis 3, **dadurch gekennzeichnet, dass** die Messgröße in oder nach dem jeweiligen Austragsorgan erfasst wird und/oder der Feststoff während der Durchströmung des Silos geheizt oder gekühlt wird.

5. Verfahren nach einem der Ansprüche 1 bis 4, **dadurch gekennzeichnet, dass** als Messgröße für den Feststoffmassenstrom und/oder die Temperatur an einem Sensor mit einem innenilegenden elektrischen Heizleiter mit integriertem Temperaturfühler der zur Aufrechterhaltung einer vorgegebenen Sensortemperatur erforderliche Leistungseintrag verwendet wird.

6. Verfahren nach einem der Ansprüche 1 bis 5, **dadurch gekennzeichnet, dass** als Messgröße für den Feststoffmassenstrom und/oder die Temperatur eines elektrisch leitfähigen Schüttguts In einem Teilabschnitt des Silos die Stromstärke zwischen in das Schüttgut ragenden Elektroden verwendet wird.

7. Verfahren nach einem der Ansprüche 1 bis 6, **dadurch gekennzeichnet, dass** als Messgröße für den Feststoffmassenstrom und/oder die Temperatur der lokale Leistungseintrag in den Feststoff beim Heizen oder Kühlen in einem Teilabschnitt des Silos verwendet wird.

8. Verfahren nach einem der Ansprüche 1 bis 7, **dadurch gekennzeichnet, dass** die Austragsgeschwindigkeit aller Teilquerschnitte in Abhängigkeit von einer Messgröße, welche dem Füllgrad des Silos entspricht, geregelt wird.

9. Verfahren nach einem der Ansprüche 1 bis 8, **dadurch gekennzeichnet, dass** die Austragsgeschwindigkeit alier Teilquerschnitte in Abhängigkeit von dem dem Silo zugeführten Feststoffmassenstrom geregelt wird.

10. Verfahren nach einem der Ansprüche 1 bis 9, **dadurch gekennzeichnet, dass** der Leistungseintrag an der Heiz- oder Kühlvorrichtung eines Teilabschnitts des Silos in Abhängigkeit von der Temperatur des Feststoffes am jeweiligen Teilquerschnitt des Austragsquerschnitts geregelt wird.

11. Austragseinrichtung für ein mit Feststoff durchströmtes Silo mit einer polygonalen oder runden Austragsöffnung, wobei die Austragseinrichtung mehrere getrennte Austragsteilquerschnitte aufweist, die mit individuellen Austragsorganen versehen sind, wobei die Austragsorgane unabhängig voneinander regelbar sind, **dadurch gekennzeichnet, dass** Einrichtungen zum Erfassen einer die physikalischen oder chemischen Eigenschaften des Feststoffes repräsentierenden und sich beim Durchströmen des Silos ändernden Messgröße vorgesehen sind, die als Regelparameter verwendbar ist, wobei sie derartige Einrichtungen zur Messung des Feststoffmassenstroms für jeden Teilquerschnitt des Silos aufweist.

12. Austragseinrichtung nach Anspruch 11, **dadurch gekennzeichnet, dass** Einrichtungen zum Messen der Temperatur für jeden Teilquerschnitt vorgesehen sind und/oder die Teilquerschnitte einen vorzugsweise untereinander gleichförmigen Querschnitt aufweisen und/oder die Austragungseinrichtung mehrere Austragsorgane aufweist, die gemeinsam regelbar sind und/oder die Austragsorgane Schnecken, Schwingförderer oder Bänder sind und/oder die Austragsöffnungen der Austragsorgane gegenüberliegend angeordnet sind und/oder die Austragsorgane Zellenradschleusen aufweisen und/oder die Austragsgeschwindigkeit der Austragsorgane über Frequenzumformer regelbar ist und/oder die Austragsgeschwindigkeit der Austragsorgane über Verstellgetriebe regelbar ist und/oder den regelbaren Austragsorganen ein im wesentlichen kontinuierlich arbeitendes Fördergerät nachgeschaltet ist, um die aus den regelbaren Austragsorganen austretenden Feststoffströme zusammenzufassen.

13. Silo für Feststoffe mit einem polygonalen oder runden Austragsquerschnitt, wobei das Silo für eine Durchströmung mit einem Feststoff ausgelegt ist, wobei es mindestens einen Sensor zur Erfassung einer Messgröße aufweist, welcher innerhalb des Füllvolumens des Silos anstelle von oder zusätzlich zu in oder nach den jeweiligen, dem Silo nachgeschalteten Austragsorganen angeordneten Sensoren vorgesehen ist, wobei die Messgröße als Regelparameter für die dem Silo nachgeschalteten Austragsorgane verwendbar ist, **dadurch gekennzeichnet, dass** es eine Austragseinrichtung nach einem der Ansprüche 11 oder 12 aufweist.

14. Feststoffsilo nach Anspruch 13, **dadurch gekennzeichnet, dass** es Vorrichtungen zum Heizen oder Kühlen des Feststoffs während der Durchströmung des Silos aufweist und/oder es Einrichtungen zur elektrischen Widerstandsheizung eines teitfähigen Feststoffs aufweist und/oder es Einrichtungen zur Erwärmung Feststoffs während der Durchströmung des Silos mittels einem dampf- bzw. gasförmigen oder flüssigen Wärmeträgermedium aufweist und/oder es eine elektrische Heizeinrichtung zum Erwärmen des Feststoffs während der Durchströmung des Silos aufweist

15. Feststoffsilo nach einem der Ansprüche 13 oder 14, **dadurch gekennzeichnet, dass** mehrere gleichartige Sensoren über den Siloquerschnitt verteilt und in Zuordnung zu den verschiedenen Austragsteilquerschnitten nachgeschalteten Austragsorganen angeordnet sind und/oder mehrere gleichartige Sensoren über die Höhe verteilt innerhalb eines Teilabschnittes angeordnet sind und/oder die Austragsöffnungen der Austragsorgane mittig unterhalb des Silos angeordnet sind.

## Claims

1. A method of discharging a solid from a silo having a polygonal or round discharge cross-section, wherein the solid flows continuously through the silo, wherein the discharge cross-section is subdivided into a plurality of cross-sectional portions and the discharge speed of each cross-sectional portion is individually adjusted and regulated, **characterised in that** the discharge speed of each cross-sectional portion is regulated in dependence on a measurement signal which is derived from a measurement parameter of the solid, which is detected for a partial portion of the silo, that is associated with the respective cross-sectional portion, wherein the measurement signal of each cross-sectional portion represents the solid mass flow within the cross-sectional portion of the silo.

2. A method according to claim 1 **characterised in that** the discharge speed of each cross-sectional portion is regulated in dependence on a measurement signal which provides a measurement for the temperature of the solid within the partial portion of the silo.

3. A method according to one of claims 1 and 2 **characterised in that** the measurement parameter is detected within the storage volume in the silo.

4. A method according to one of claims 1 to 3 **characterised in that** the measurement parameter is detected in or downstream of the respective discharge member and/or the solid is heated or cooled while flowing through the silo.

5. A method according to one of claims 1 to 4 **characterised in that** the power input required to maintain a predetermined sensor temperature is used as the measurement parameter for the solid mass flow and/or the temperature at a sensor having an internally disposed electric heating conductor with integrated temperature sensor.

6. A method according to one of claims 1 to 5 **characterised in that** used as the measurement parameter for the solid mass flow and/or the temperature of an electrically conductive bulk material in a partial portion of the silo is the current strength between electrodes projecting into the bulk material.

7. A method according to one of claims 1 to 6 **characterised in that** the local power input into the solid upon heating or cooling in a partial portion of the silo is used as the measurement parameter for the solid mass flow and/or the temperature.

8. A method according to one of claims 1 to 7 **characterised in that** the discharge speed of all cross-sectional portions is regulated in dependence on a measurement parameter corresponding to the degree of filling of the silo.

9. A method according to one of claims 1 to 8 **characterised in that** the discharge speed of all cross-sectional portions is regulated in dependence on the solid mass flow fed to the silo.

10. A method according to one of claims 1 to 9 **characterised in that** the power input at the heating or cooling device of a partial portion of the silo is regulated in dependence on the temperature of the solid at the respective cross-sectional portion of the discharge cross-section.

11. A discharge device for a silo having a polygonal or round discharge opening and through which solid flows, wherein the discharge device has a plurality of separate discharge cross-sections provided with individual discharge members, wherein the discharge members are regulatable independently of each other, **characterised in that** there are provided devices for detecting a measurement parameter which represents the physical or chemical properties of the solid and which changes when the solid flows through the silo and which can be used as a regulating parameter, wherein it has such devices for measuring the solid mass flow for each cross-sectional portion of the silo.

12. A discharge device according to claim 11 **characterised in that** there are provided devices for measuring the temperature for each cross-sectional portion and/or the cross-sectional portions are of a cross-section which is preferably uniform with each other and/or the discharge device has a plurality of discharge members which are jointly regulatable and/or the discharge members are screws, vibrating conveyors or belts and/or the discharge openings of the discharge members are arranged in mutually opposite relationship and/or the discharge members have cell wheel lock devices and/or the discharge speed of the discharge members is regulatable by way of frequency converters and/or the discharge speed of the discharge members is regulatable by way of adjusting transmissions and/or a substantially continuously operating conveyor device is arranged downstream of the regulatable discharge members in order to combine together the solid flows issuing from the regulatable discharge members.

13. A silo for solids having a polygonal or round discharge cross-section, wherein the silo is designed for a flow therethrough of a solid, wherein it has at least one sensor for detecting a measurement parameter, which sensor is provided within the filling volume of the silo instead of or in addition to sensors arranged in or downstream of the respective discharge members connected downstream of the silo, wherein the measurement parameter can be used as a regulating parameter for the discharge members connected downstream of the silo, **characterised in that** it has a discharge device according to one of claims 11 and 12.

14. A solids silo according to claim 13 **characterised in that** it has devices for heating or cooling the solid while flowing through the silo and/or it has devices for electric resistance heating of a conductive solid and/or it has devices for heating the solid while flowing through the silo by means of a vapour or gas or liquid heat carrier medium and/or it has an electric heating device for heating the solid while flowing through the silo.

15. A solids silo according to one of claims 13 and 14 **characterised in that** a plurality of similar sensors are arranged distributed over the silo cross-section and in association with discharge members connected downstream of the various discharge cross-sections and/or a plurality of similar sensors are arranged distributed over the height within a partial portion and/or the discharge openings of the discharge members are arranged centrally beneath the silo.

## Revendications

1. Procédé pour décharger une matière solide d'un silo à section de déchargement polygonale ou ronde, le silo étant continuellement traversé par la matière solide, la section de déchargement étant subdivisée en plusieurs sections partielles et la vitesse de déchargement de chaque section partielle étant réglée et régulée individuellement, **caractérisé en ce que** la vitesse de déchargement de chaque section partielle est régulée en fonction d'un signal de mesure qui est dérivé d'une grandeur mesurée de la matière solide, qui est captée pour un segment partiel du silo correspondant à la section partielle considérée, le signal de mesure de chaque section partielle représentant le débit massique de matière solide à l'intérieur de la section partielle du silo.

2. Procédé selon la revendication 1, **caractérisé en ce que** la vitesse de déchargement de chaque section partielle est régulée en fonction d'un signal de mesure qui donne une mesure de la température de la matière solide à l'intérieur de la section partielle du silo.

3. Procédé selon l'une des revendications 1 ou 2, **caractérisé en ce que** la grandeur mesurée est captée à l'intérieur du volume de réserve du silo.

4. Procédé selon l'une des revendications 1 à 3, **caractérisé en ce que** la grandeur mesurée est captée dans l'organe de déchargement considéré ou en aval de cet organe et/ou **en ce que** la matière solide est chauffée ou refroidie pendant la traversée du silo.

5. Procédé selon l'une des revendications 1 à 4, **caractérisé en ce qu'**on utilise comme grandeur mesurée pour le débit massique de matière solide et/ou pour la température l'apport de puissance nécessaire pour entretenir une température de capteur prédéterminée au niveau d'un capteur possédant un conducteur électrique chauffant intérieur à sonde de température intégrée.

6. Procédé selon l'une des revendications 1 à 5, **caractérisé en ce qu'**on utilise comme grandeur mesurée pour le débit massique de matière solide et/ou pour la température d'une matière en vrac conductrice de l'électricité dans un segment partiel du silo l'intensité du courant passant entre des électrodes qui plongent dans la matière en vrac.

7. Procédé selon l'une des revendications 1 à 6, **caractérisé en ce qu'**on utilise comme grandeur mesurée pour le débit massique de matière solide et/ou la température l'apport de puissance local appliqué à la matière solide dans un segment partiel du silo lors du chauffage ou du refroidissement.

8. Procédé selon l'une des revendications 1 à 7, **caractérisé en ce que** la vitesse de déchargement de toutes les sections partielles est régulée en fonction d'une grandeur mesurée qui correspond au degré de remplissage du silo.

9. Procédé selon l'une des revendications 1 à 8, **caractérisé en ce que** la vitesse de déchargement de toutes les sections partielles est régulée en fonction du débit massique de matière solide acheminé dans le silo.

10. Procédé selon l'une des revendications 1 à 9, **caractérisé en ce que** l'apport de puissance est régulé au niveau du dispositif de chauffage ou de refroidissement d'un segment partiel du silo en fonction de la température de la matière solide au niveau de la section partielle considérée de la section de déchargement.

11. Dispositif de déchargement pour un silo qui est traversé par une matière solide, qui présente une ouverture de déchargement polygonale ou ronde, le dispositif de déchargement présentant plusieurs sections de déchargement partielles séparées qui sont équipées d'organes de déchargement individuels, les organes de déchargement pouvant être régulés indépendamment les uns des autres, **caractérisé en ce qu'**il est prévu des dispositifs servant à capter une grandeur mesurée représentant les propriétés physiques ou chimiques de la matière solide et qui varie lors de la traversée du silo, grandeur qui peut être utilisée comme paramètre de régulation, le dispositif de déchargement présentant des dispositifs de ce type pour la mesure du débit massique de matière solide pour chaque section partielle du silo.

12. Dispositif de déchargement selon la revendication 11, **caractérisé en ce que** sont prévus des dispositifs de mesure de la température pour chaque section partielle et/ou **en ce que** les sections partielles présentent une section qui est de préférence de même forme et/ou **en ce que** le dispositif de déchargement présente plusieurs organes de déchargement qui peuvent être réglés ensemble et/ou **en ce que** les organes de déchargement sont des vis sans fin, des transporteurs vibrants ou des bandes et/ou **en ce que** les orifices de déchargement des organes de déchargement sont disposés face-à-face et/ou **en ce que** les organes de déchargement présentent des écluses à roue cellulaire et/ou **en ce que** la vitesse de déchargement des organes de déchargement peut être réglée au moyen de convertisseurs de fréquence et/ou **en ce que** la vitesse de déchargement des organes de déchargement peut être réglée au moyen de mécanismes ajustables et/ou **en ce qu'**un appareil transporteur travaillant sensiblement en continu est placé en aval des organes de déchargement réglables, afin de réunir les flux de matière solide qui sortent des organes de déchargement réglables.

13. Silo pour matières solides présentant une section de déchargement polygonale ou ronde, le silo étant conçu pour être traversé par une matière solide, et présentant au moins un capteur destiné à capter une grandeur mesurée qui est prévu à l'intérieur du volume de remplissage du silo en remplacement ou en supplément de capteurs montés dans les organes de déchargement ou en aval de ces organes, la grandeur mesurée pouvant être utilisée comme paramètre de régulation pour les organes de déchargement situés en aval du silo, **caractérisé en ce qu'**il présente un dispositif de déchargement selon l'une des revendications 11 ou 12.

14. Silo pour matières solides selon la revendication 13, **caractérisé en ce qu'**il présente des dispositifs de chauffage ou de refroidissement de la matière solide pendant la traversée du silo et/ou des dispositifs de chauffage électrique par résistance d'une matière solide conductrice et/ou des dispositifs de chauffage de la matière solide pendant la traversée du silo en utilisant un milieu caloporteur sous forme de vapeur, ou gazeux ou liquide et/ou un dispositif de chauffage électrique destiné à chauffer la matière solide pendant la traversée du silo.

15. Silo pour matières solides selon l'une des revendications 13 ou 14, **caractérisé en ce que** plusieurs capteurs de même type sont répartis sur la section transversale du silo et sont disposés en association avec les organes de déchargement situés en aval des différentes sections partielles de déchargement et/ou **en ce que** plusieurs détecteurs de même type sont disposés à l'intérieur d'une section partielle, répartis sur la hauteur, et/ou **en ce que** les ouvertures de déchargement des organes de déchargement sont situées au milieu au-dessous du silo.
